# EUROPEAN PATENT APPLICATION

(11) **EP 1 900 977 A2**
(43) Date of publication of application: **19.03.2008**
(21) Application number: 07015917.3
(22) Date of filing: 13.08.2007
(51) Int. Cl.: F16H 61/12

(54) **Failure detection device and method for automatic transmission**

(30) Priority: 13.09.2006 JP 2006248076
(71) Applicant: JATCO Ltd, Fuji-City, Shizuoka 417-8585 (JP)
(72) Inventor: Kawaguchi, Takateru c/o JATCO Ltd., Fuji City Shizuoka 417-8585 (JP); Mochiyama, Shinya c/o JATCO Ltd., Fuji City Shizuoka 417-8585 (JP)
(74) Representative: Grünecker, Kinkeldey, Stockmair & Schwanhäusser Anwaltssozietät

(57) **Abstract**

There is provided a failure detection device for an automatic transmission having a one-way clutch to disable engine braking in a given gear stage and an engine braking friction element to lock the one-way clutch and switching between a first shift mode in which the engine braking friction element is disengaged in the given gear stage and a second shift mode in which the engine braking friction element is engaged in the given gear stage. The failure detection device includes a failure detection unit that detects a failure in the automatic transmission based on a deviation between actual and target transmission gear ratios during non-shift operation of the automatic transmission and a prohibition unit that prohibits operation of the failure detection unit until a predetermined time has elapsed from switching of the automatic transmission from the first shift mode to the second shift mode.

## Description

### BACKGROUND OF THE INVENTION

The prevent invention relates to a device and method for detecting a gear ratio failure in an automatic transmission.

A multi-stage automatic transmission has been put into practical use in an automotive vehicle, which selects a target gear stage from multiple preset gear stages based on engine load and vehicle speed and shifts an actual gear stage to the target gear stage by means of a transmission mechanism. The transmission mechanism generally includes a plurality of planetary gear trains and friction elements to lock and release sun gears, ring gears and planet carriers of the planetary gear trains upon selective engagement and disengagement of the friction elements and thereby establish a power transmission path that receives engine rotation through a torque converter, changes the speed of the engine rotation at a gear ratio in accordance with the selected gear stage, and then, outputs the resultant rotation to an axle drive or propeller shaft.

It is now common practice to mount a failure detection device on the automatic transmission so as to form a fail-safe transmission system in which the failure detection device detects the occurrence of a failure in the automatic transmission when there arises a deviation between actual and target gear ratios and, upon detection of the transmission failure, gives a display or voice alarm to a vehicle driver. Japanese Laid-Open Patent Publication No. 2000-240785 proposes one such type of failure detection device that calculates the actual gear ratio based on a difference between vehicle speed (transmission output shaft rotational speed) and turbine shaft rotational speed (transmission input shaft rotational speed), causes a failure detection timer to count a time duration during which the deviation between the actual and target gear ratios exceeds a certain threshold level and, when the timer count reaches a predetermined time duration, determines that the failure is occurring in any of the transmission friction elements.

### SUMMARY OF THE INVENTION

The automatic transmission is recently equipped with not only an automatic shift mode (D range) but also a manual shift mode (M range) so that the vehicle driver can enjoy driving pleasure more actively upon selection of the manual shift mode.

Under the automatic shift mode, it is desirable not to apply strong engine braking when the vehicle is coasting with the accelerator turned off and the automatic transmission placed in a low gear stage e.g. first or second gear stage. A one-way clutch is thus installed in the automatic transmission so as to interrupt power transmission from the vehicle wheel side to the engine side and disable engine braking during the vehicle coasting under the automatic shift mode. In this vehicle coasting state, the transmission gear ratio becomes unsteady and cannot be calculated accurately. In order to avoid failure misdetection due to such an unsteady gear ratio during the vehicle coasting under the automatic shift mode, the failure detection device is conceivably configured to: judge based on e.g. throttle opening TVO whether the vehicle is in a coasting state or a normal driving state; calculate the transmission gear ratio to allow failure detection when the vehicle is judged as being in the normal driving state; and prohibit the calculation of the transmission gear ratio or ignore the calculation result of the transmission gear ratio to prohibit failure detection when the vehicle is judged as being in the coasting state.

Under the manual shift mode, by contrast, it is desirable to apply engine braking during the vehicle coasting. An engine braking friction element is thus also installed in the automatic transmission in parallel with the one-way clutch so as to lock the one-way clutch and apply engine braking by engagement of the engine braking friction element during the vehicle coasting under the manual shift mode. The transmission gear ratio becomes steady upon full engagement of the engine braking friction element even during the vehicle coasting. The failure detection device is then conceivably configured to calculate the transmission gear ratio to allow failure detection regardless of the throttle opening TVO or under the condition that the throttle opening TVO is greater than or equal to a given threshold level (almost zero).

With the above configuration, however, the failure detection device initiates its failure detection operation at the time the automatic transmission is switched from the automatic shift mode to the manual shift mode in the low gear stage during the vehicle coasting. The transmission gear ratio is kept unsteady until the completion of engagement of the engine braking friction element. It is conceivable to set the failure detection timer for a higher count in view of the time required for full engagement of the engine braking friction element and thereby avoid failure misdetection due to the unsteady gear ratio. However, this results in a failure detection delay under normal conditions.

It is therefore an object of the present invention to provide a device and method for detecting a gear ratio failure in an automatic transmission without mistake and detection delay even at the time of transmission switchover from an automatic shift mode to a manual shift mode.

According to a first aspect of the present invention, there is provided a failure detection device for an automatic transmission, the automatic transmission being operable in first and second shift modes and having a one-way clutch to disable engine braking in a given gear stage and a plurality of friction elements to establish a power transmission path in accordance with a selected gear stage by selective engagement and disengagement of the friction elements, the friction elements including an engine braking friction element arranged in parallel with the one-way clutch so as to release the one-way clutch by disengagement of the engine braking friction element in the given gear stage under the first shift mode and to lock the one-way clutch by engagement of the engine braking friction element in the given gear stage under the second shift mode, the failure detection device comprising: a failure detection unit that detects a failure in any of the friction elements of the automatic transmission based on a deviation between actual and target transmission gear ratios during non-shift operation of the automatic transmission; and a prohibition unit that prohibits operation of the failure detection unit until a predetermined time has elapsed from switching of the automatic transmission from the first shift mode to the second shift mode.

According to a second aspect of the present invention, there is provided a failure detection device for an automatic transmission, the automatic transmission being operable in first and second shift modes and having a one-way clutch to disable engine braking in a given gear stage and a plurality of friction elements to establish a power transmission path in accordance with a selected gear stage by selective engagement and disengagement of the friction elements, the friction elements including an engine braking friction element arranged in parallel with the one-way clutch so as to release the one-way clutch by disengagement of the engine braking friction element in the given gear stage under the first shift mode and to lock the one-way clutch by engagement of the engine braking friction element in the given gear stage under the second shift mode, the failure detection device comprising: a failure detection unit that detects a failure in any of the friction elements of the automatic transmission based on a deviation between actual and target transmission gear ratios upon satisfaction of a certain condition during non-shift operation of the automatic transmission; and a prohibition unit that prohibits operation of the failure detection unit for a lapse of a predetermined time regardless of the satisfaction of the certain condition when the automatic transmission is switched from the first shift mode to the second shift mode and allows operation of the failure detection unit immediately upon the satisfaction of the certain condition when the automatic transmission is switched from the second shift mode to the first shift mode.

According to a third aspect of the present invention, there is provided a failure detection method for an automatic transmission, the automatic transmission being operable in first and second shift modes and having a one-way clutch to disable engine braking in a given gear stage and a plurality of friction elements to establish a power transmission path in accordance with a selected gear stage by selective engagement and disengagement of the friction elements, the friction elements including an engine braking friction element arranged in parallel with the one-way clutch so as to release the one-way clutch by disengagement of the engine braking friction element in the given gear stage under the first shift mode and to lock the one-way clutch by engagement of the engine braking friction element in the given gear stage under the second shift mode, the failure detection method comprising: detecting a failure in any of the friction elements of the automatic transmission based on a deviation between actual and target transmission gear ratios upon satisfaction of a certain condition; and prohibiting the failure detection until a predetermined time has elapsed from switching of the automatic transmission from the first shift mode to the second shift mode.

The other objects and features of the present invention will also become understood from the following description.

### BRIEF DESCRIPTION OF THE DRAWINGS

FIG. 1 is a block diagram of a transmission system having an automatic transmission and a failure detection device according to one embodiment of the present invention.

FIG. 2 is a schematic diagram of the automatic transmission according to one embodiment of the present invention.

FIG. 3 is a logic diagram showing the engagement and disengagement of friction elements in the automatic transmission of FIG. 2

FIGS. 4A to 4H are time charts of failure detection operation of the failure detection device according to one embodiment of the present invention.

FIGS. 5 and 6 are flow chart of the failure detection operation of the failure detection device according to one embodiment of the present invention.

FIGS. 7A to 7F are time charts of transmission failure detection operation according to the earlier technology.

### DESCRIPTIONS OF THE EMBODIMENTS

A transmission system for an automotive vehicle according to one exemplary embodiment of the present invention will be described below in detail with reference to the drawings.

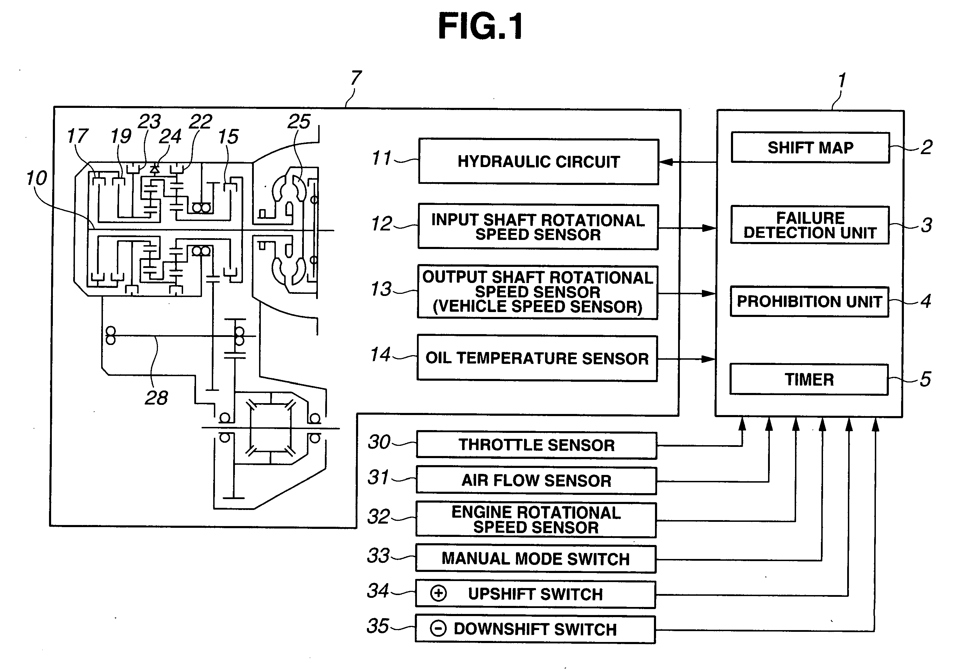

Referring to FIG. 1, the transmission system is provided with a turbine 25, an automatic transmission 7 and a transmission controller 1.

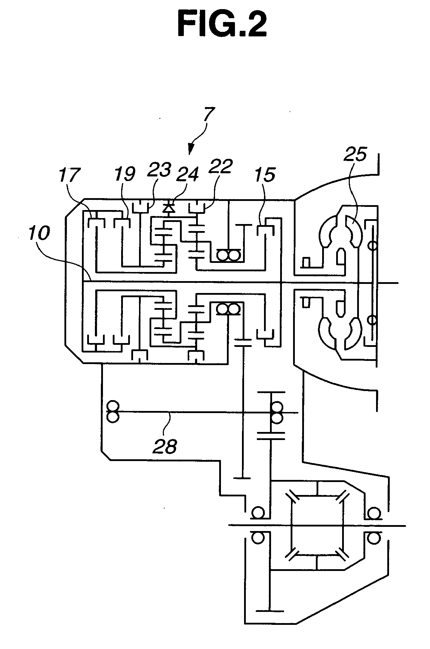

The automatic transmission 7 includes a transmission mechanism having planetary gear trains, friction elements (hydraulic clutches and brakes) such as a first clutch 15, a second clutch 17, a third clutch 19, a first brake 22 and a second brake 23 to lock and release sun gears, ring gears and planet carriers of the planetary gear trains and thereby establish a power transmission path between a turbine shaft 10 (as a transmission input shaft) and a transmission output shaft 28 by selective engagement and disengagement of the friction elements 15, 17, 19, 22 and 23 in accordance with a selected gear stage as well as a one-way clutch 24 as shown in FIGS. 1 and 2. The structure of the automatic transmission 7 is substantially similar to those disclosed in Japanese Laid-Open Patent Publication No. 8-145157 and No. 2000-104821 except for the one-way clutch 24. A detail explanation of the automatic transmission 7 will be thus omitted for the sake of simplicity. The automatic transmission 7 further includes a hydraulic circuit 11 having a plurality of solenoid valves to regulate the supply of transmission oil (ATF) from an oil pump by duty control of the solenoid valves for engagement and disengagement control of the friction elements 15, 17, 19, 22, 23 and 24 as shown in FIG. 1.

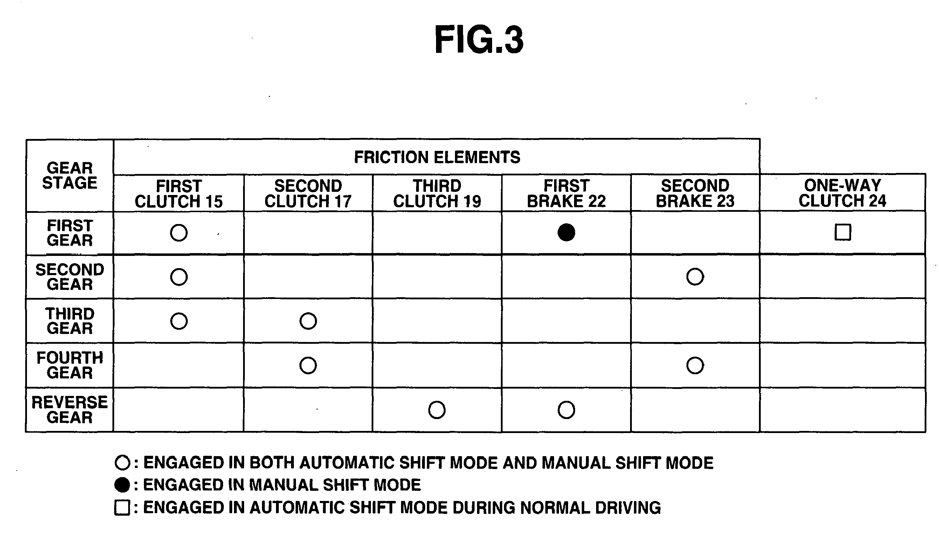

In the present embodiment, the automatic transmission 7 has multiple gear stages e.g. first to fourth gear stages. As shown in FIG. 3, the gear stage of the automatic transmission 7 is determined depending on engagement and disengagement states of the friction elements 15, 17, 19, 22 and 23. For example, the automatic transmission 7 is placed in the second gear stage by engagement of the first clutch 15 and the second brake 23 and by disengagement of the second and third clutches 17 and 19 and the first brake 22. The automatic transmission 7 shifts from the second gear stage to the third gear stage by engagement of the second clutch 17 and by disengagement of the second brake 23. In this way, the engagement and disengagement states of the friction elements 15, 17, 19, 22 and 23 are controlled at appropriate timing for proper shift control of the automatic transmission 7.

Although not shown in the drawings, the automatic transmission 7 also has a shift lever operated by a vehicle driver to select from D range (forward drive range), R range (reverse drive range), P range (parking range), N range (neutral range) and M range (manual range). In the present embodiment, D range and M range correspond to an automatic shift mode (first shift mode) and a manual shift mode (second shift mode), respectively, so that the automatic transmission 7 can be switched between these shift modes in accordance with driver's preferences. During selection of the manual shift mode (M range), there arises a shift lever gate through which the shift lever is moved for manual upshift or downshift of the automatic transmission 7.

In order to avoid a strong deceleration feeling when the vehicle is coasting with the accelerator turned off and the automatic transmission 7 placed in a given low gear stage e.g. first gear stage under the automatic shift mode (D range), the one-way clutch 24 is disengaged to interrupt power transmission from the vehicle wheel side to the engine side and disable engine braking. Alternatively, the one-way clutch 24 may be disengaged in the second gear stage or in both the first and second gear stages under the automatic shift mode (D range). When the accelerator is turned on, the one-way clutch 24 is engaged to allow power transmission from the engine side to the vehicle wheel side.

The first brake 22, which serves as an engine braking friction element in the present embodiment, is arranged in parallel with the one-way clutch 24 so as to lock the one-way clutch 24 by engagement of the first brake 22 in the given low gear stage under the manual shift mode (M range) and release the one-way clutch 24 by disengagement of the first brake 22 in the given low gear stage under the automatic shift mode (D range). This makes it possible to disable engine braking in the given low gear stage under the automatic shift mode but apply engine braking in the given low gear stage under the manual shift mode for active driving pleasure of the vehicle driver.

Referring again to FIG. 1, the transmission system is also provided with various detecting/switching units such as an input shaft rotational speed sensor 12 for detecting a rotational speed Nt of the turbine 25 or turbine shaft 10, an output shaft rotational speed sensor (or vehicle speed sensor) 13 for detecting a rotational speed No of the transmission output shaft 28 to determine a vehicle speed VSP based on the output shaft rotational speed No, an oil temperature sensor 14 for detecting a temperature of the transmission oil, a throttle sensor 30 for detecting an engine throttle opening TVO, an air flow sensor 31 for detecting an engine intake amount, an engine rotational sensor 32 for detecting a engine rotation speed, a manual mode switch 33 that is actuated when the shift lever position is changed from D range to M range, an upshift switch 34 that is disposed on a front side of the shift lever gate and actuated when the shift lever is moved frontward relative to the middle position within the shift lever gate for upshift operation of the automatic transmission 7 and a downshift switch 35 that is disposed on a rear side of the shift lever gate and actuated when the shift lever is moved rearward relative to the middle position within the shift lever gate for downshift operation of the automatic transmission 7.

The transmission controller 1 is connected with these detecting/switching units 12, 13, 14, 30 and 31 to 35 and configured to perform integrated control of the operations of the automatic transmission 7 (the engagement and disengagement states of the friction elements 15, 17, 19, 22 and 23) through the hydraulic circuit 11 based on the inputs from the detecting/switching units 12, 13, 14, 30 and 31 to 35.

More specifically, the transmission controller 1 stores therein a shift map 2 as shown in FIG. 1 to define a target gear stage with respect to the throttle opening TVO (engine load) and vehicle speed VSP.

Under the automatic shift mode (D range), the transmission controller 1 automatically selects an appropriate one of the multiple gear stages as the target gear stage based on the inputs from the sensors 13 and 30 with reference to the shift map 2, and then, output drive signals (duty ratio signals) to the solenoid valves of the hydraulic circuit 11 for engagement and disengagement control of the friction elements 15, 17, 19, 22 and 23 in accordance with the selected gear stage.

Under the manual shift mode (M range), by contrast, the transmission controller 1 selects the target gear stage based on the inputs from the switches 34 or 35 in accordance with a driver's shift lever operation, and then, outputs drive signals (duty ratio signals) to the solenoid valves of the hydraulic circuit 11 for engagement and disengagement control of the friction elements 15, 17, 19, 22 and 23 in accordance with the selected gear stage. However, the transmission controller 1 causes the automatic transmission 7 to automatically shift down under deceleration even without a driver's downshift operation and shift to the first gear stage at a vehicle stop.

As shown in FIG. 1, the transmission controller 1 has a failure detection unit 3, a failure detection timer, a prohibition unit 4 and a detection prohibit timer 5 in order to detect the occurrence of a failure in the automatic transmission 7 in the present embodiment. In other words, the transmission controller 1 functions as a failure detection device.

The failure detection unit 3 judges whether the actual gear stage is in agreement with the target gear stage and detects that the failure is occurring in any of the transmission friction elements 15, 17, 19, 22 and 23 when there arises a disagreement between the actual and target gear stages.

As mentioned above, the one-way clutch 24 is disengaged to disable engine braking during the vehicle coasting under the automatic shift mode (D range). In this vehicle coasting state, the transmission gear ratio becomes unsteady and cannot be calculated accurately. In order to avoid failure misdetection due to such an unsteady gear ratio, the failure detection unit 3 carries out failure detection upon satisfaction of a certain condition during non-shift operation of the automatic transmission 7. The certain condition is whether the vehicle is not in the coasting state with the accelerator turned off and the automatic transmission 7 placed in the low gear stage (first gear stage). For example, the vehicle can be judged as being in the coasting state when the throttle opening TVO is smaller than a certain threshold level (e.g. 6/8) and judged as not being in the coasting state (but as being in the normal driving state with the accelerator turned on) when the throttle opening TVO is greater than or equal to the certain threshold level.

When the vehicle is not in the coasting state under the automatic shift mode, the failure detection unit 3 determines an actual gear ratio based on the inputs from the sensors 12 and 13, determines a target gear ratio corresponding to the target gear stage, causes the failure detection timer to count the time during which the deviation between the actual and target gear ratios exceeds a certain threshold level, and then, detects the transmission failure when the timer count reaches a predetermined time duration T'. When the vehicle is in the coasting state under the automatic shift mode, the failure detection unit 3 stops the calculation of the transmission gear ratio or ignores the calculation result of the transmission gear ratio to avoid failure detection.

On the other hand, the first brake 22 is engaged to apply engine braking during the vehicle coasting under the manual shift mode (M range) as mentioned above. Upon engagement of the first brake 22, the transmission gear ratio becomes steady even during the vehicle coasting. The failure detection unit 3 thus allows failure detection regardless of the throttle opening TVO during the vehicle coasting under the manual shift mode (M range).

At the time the automatic transmission 7 is switched from the automatic shift mode (D range) to the manual shift mode (M range) in the given low gear stage where the first brake 22 comes into engagement, the transmission gear ratio is kept unsteady until the completion of engagement of the first brake 22. If the failure detection unit 3 initiates its failure detection operation concurrently with the switching of the automatic transmission 7 from the automatic shift mode (D range) to the manual shift mode (M range) during the vehicle coasting, it is very likely that the gear ratio deviation will exceed the certain level for a longer time duration due to an unsteady gear ratio. This leads to misdetection of the transmission failure.

In order to avoid such failure misdetection, the prohibition unit 4 judges whether the automatic transmission 7 is switched from the automatic shift mode (D range) to the manual shift mode (M range) during the vehicle coasting and, when the automatic transmission 7 is switched from the automatic shift mode (D range) to the manual shift mode (M range) during the vehicle coasting, causes the detection prohibit timer 5 to start a count and prohibits the operation of the failure detection unit 3 temporarily until the timer 5 counts a predetermined time duration T from the switching of the transmission shift mode. The time duration T is defined as being between initiation and completion of engagement of the first brake 22. Namely, the prohibition unit 4 permits the operation of the failure detection unit 3 after the first brake 22 comes into full engagement. This makes it possible to prohibit failure detection under unstable gear ratio conditions and avoid failure misdetection for improvement in failure detection accuracy.

Although the prohibition unit 4 prohibits the operation of the failure detection unit 3 for the predetermined time duration T when the automatic transmission 7 is switched from the automatic shift mode (D range) to the manual shift mode (M range) during the vehicle coasting regardless of the transmission gear stage in the present embodiment, the prohibition unit 4 may alternatively prohibit the operation of the failure detection unit 3 for the predetermined time duration T when the automatic transmission 7 is switched from the automatic shift mode (D range) to the manual shift mode (M range) only in the given low gear stage where the first brake 22 comes into engagement to lock the one-way clutch 24 during the vehicle coasting.

The prohibition unit 4 may also alternatively count the time duration T based on any parameter by which the engagement state of the first brake 22 can be judged although the prohibition unit 4 utilizes the timer 5 to count the time duration T in the present embodiment. For example, the prohibition unit 4 can prohibit the operation of the failure detection unit 3 until the hydraulic engagement pressure on the first brake 22 reaches a given level.

Further, the prohibition unit 4 may alternatively prohibits the operation of the failure detection unit 3 temporarily when the automatic transmission 7 is switched from the automatic shift mode (D range) to the manual shift mode (M range), regardless of whether the vehicle is in the coasting state or not, for simplification of control logic although the prohibition unit 4 prohibits the operation of the failure detection unit 3 temporarily when the automatic transmission 7 is switched from the automatic shift mode (D range) to the manual shift mode (M range) during the vehicle coasting in the present embodiment.

At the time the automatic transmission 7 is switched from the manual shift mode (M range) to the automatic shift mode (D range), the transmission gear ratio is kept steady unless the vehicle is in the coasting state. In this case, there is no need to prohibit failure detection. The prohibition unit 4 thus permits the operation of the failure detection unit 3 upon satisfaction of the certain vehicle driving condition (e.g. the throttle opening TVO is greater than or equal to the certain threshold level) when the automatic transmission 7 is switched from the manual shift mode (M range) to the automatic shift mode (D range).

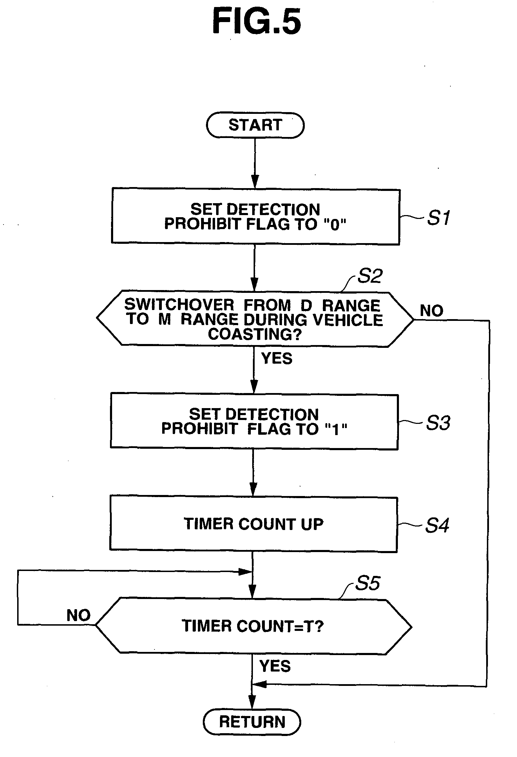

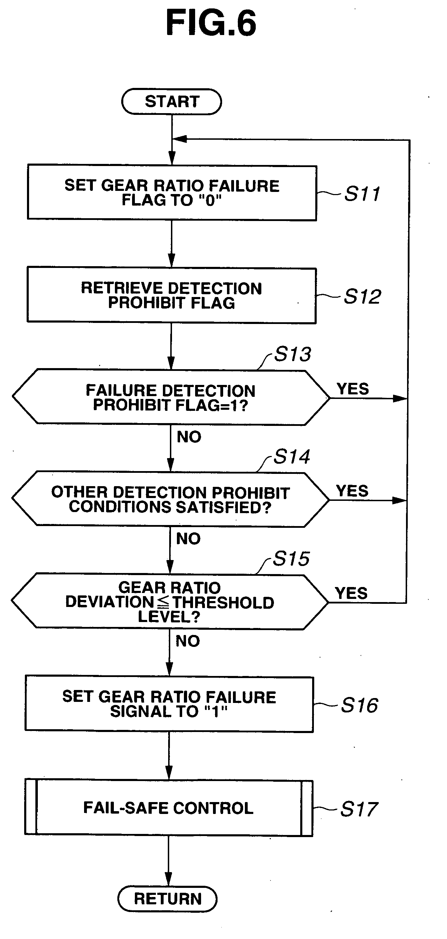

In the present embodiment, the failure detection operation is performed through the execution of a detection prohibition subroutine program shown in FIG. 5 and a failure detection subroutine program shown in FIG. 6.

At step S1, the prohibition unit 4 initializes a detection prohibit flag to "0 (OFF)" whereby the failure detection unit 3 is rendered operable.

At step S2, the prohibition unit 4 judges based on the input from the manual mode switch 33 whether the automatic transmission 7 is switched from the automatic shift mode (D range) to the manual shift mode (M range) during the vehicle coasting. If No at step S2, the program control returns to step S1 and repeats steps S1 and S2 until the automatic transmission 7 is judged as being switched from the automatic shift mode (D range) to the manual shift mode (M range) during the vehicle coasting. If Yes at step S2, the program control proceeds to step S3.

At step S3, the prohibition unit 4 sets the detection prohibit flag to "1 (ON)" whereby the failure detection unit 3 is rendered inoperative.

At step S4, the prohibition unit 4 causes the detection prohibit timer 5 to start a count.

At step S5, the prohibition unit 4 judges whether the timer 5 has counted to a predetermined time duration T. The program control repeats step S5 until the timer count reaches the predetermined time duration T, and then, returns to shift from the detection prohibition subroutine to the failure detection subroutine at the time the timer count reaches the predetermined time duration T.

At step S11, the failure detection unit 3 initializes a gear ratio failure flag to "0 (OFF)" to indicate that the automatic transmission 7 functions normally for proper gear ratio control.

At step S12, the failure detection unit 3 retrieves the detection prohibit flag from the prohibition unit 4.

At step S13, the failure detection unit 3 judges whether the detection prohibit flag is set to "1". If the detection prohibit flag is "1" (Yes at step S13), the program control returns to step S11 and repeats steps S11 to S13 to prohibit the operation of the failure detection unit 3 temporarily until the detection prohibit flag is set to "0". If the detection prohibit flag is "0" (No at step S13), the program control proceeds to step S14.

At step S14, the failure detection unit 3 judges whether other failure detection prohibit conditions are satisfied based on the inputs from the sensors 12, 13 and 30. The other failure detection prohibit conditions are e.g. whether there are any failures occurring in the sensors 12, 13 and 30. If Yes at step S14, the program control returns to step S1 to cancel failure detection. If No at step S14, the program control proceeds to step S15.

At step S15, the failure detection unit 13 causes the failure detection timer to count a time during which the deviation between the actual and target gear ratios exceeds the certain threshold level and judges whether the timer count reaches a predetermined time duration T'. If No at step S15, the program control returns to step S11 and repeats steps S11 to S15. If Yes at step S15, the program control then proceeds to step S17.

At step S16, the failure detection unit 13 determines that the failure is occurring in the automatic transmission 7 and sets the gear ratio failure flag to "1 (ON)" to indicate the occurrence of the transmission failure.

At step S17, the failure detection unit 1 performs fail-safe control to e.g. give a display or voice alarm that informs the transmission failure of the vehicle driver or control the throttle opening TVO in so-called limp-home mode (keep the throttle in a mechanically neutral position). After that, the program control returns to the main control program.

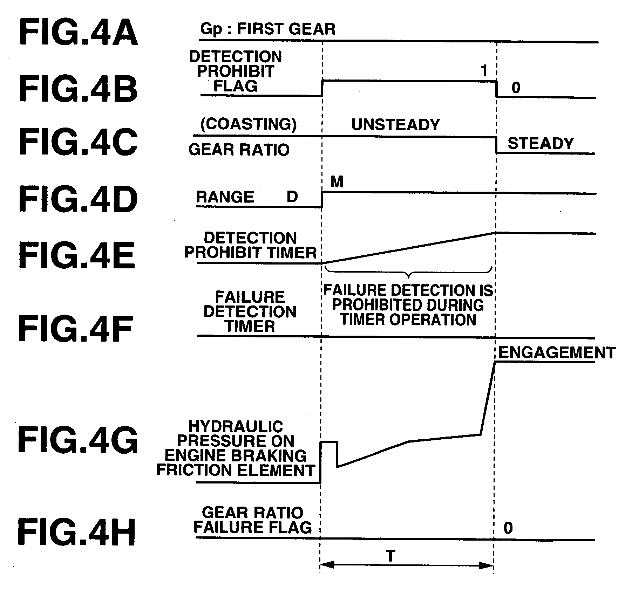

The above failure detection operation is effected as shown in FIGS. 4A to 4H.

It is now assumed that the gear stage (gear position Gp) of the automatic transmission 7 is held at the first gear during the vehicle coasting as shown in FIG. 4A. As shown in FIGS. 4D and 4G, the first brake 22 is brought into engagement when the automatic transmission 7 is switched from the automatic shift mode (D range) to the manual shift mode (M range). The transmission gear ratio is kept unstable as shown in FIG. 4C until the completion of engagement of the first brake 22.

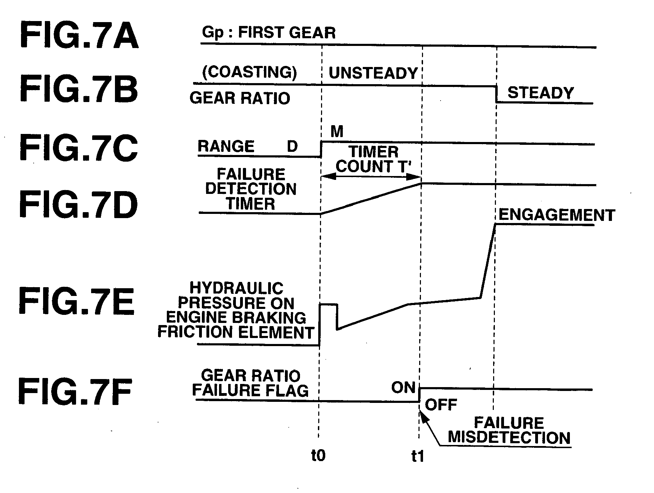

In the earlier technology, the failure detection timer starts a count before the transmission gear ratio becomes steady as shown in FIGS. 7B and 7D since the failure detection is carried out regardless of the throttle opening TVO during the vehicle coasting under the manual shift mode (M range). The unsteady gear ratio easily leads to a larger gear ratio deviation than the certain threshold level. The gear ratio failure flag is turned on as shown in FIG. 7F when the timer count reaches the time duration T' at time t1. This results in transmission failure misdetection.

In the present embodiment, on the other hand, the detection prohibit flag is turned on to prohibit failure detection during the vehicle coasting under the automatic shift mode (D range) as shown in FIG. 4B. Concurrently, the detection prohibit timer 5 starts a count as shown in FIG. 4E. The timer 5 is previously set for the predetermined time duration T during which the first brake 22 comes into full engagement. In other word, the failure detection is prohibited until the transmission gear ratio becomes stable by engagement of the first brake 22. As shown in FIGS. 4B and 4E, the detection prohibit flag is turned off to permit failure detection when the timer 5 counts to the time duration T (i.e. after the lapse of the time duration T from the switching of the transmission shift mode). At this moment, the transmission gear ratio is stable as shown in FIG. 4C so that the actual and target gear ratios agree with each other in the case where the automatic transmission 7 functions properly. The failure misdetection can be avoided, without the failure detection timer being actuated as shown in FIG. 4F and with the gear ratio failure flag being turned off as shown in FIG. 4H, even when the automatic transmission 7 is switched from the automatic shift mode (D range) to the manual shift mode (M range) in the given gear stage where the engine braking friction element 22 comes into engagement upon the shift mode switching.

As described above, it is therefore possible to avoid failure misdetection and obtain improvements in failure detection accuracy and reliability with a simple system configuration. It is also possible to avoid a delay in failure detection under normal detection conditions without the need to set the failure detection time T' to such a high count as to complete the engagement of the engine braking friction element 22. It is further possible to secure high failure detection reliability by allowing failure detection immediately upon satisfaction of the certain non-coast driving condition (TVO ≥ 6/8 in the present embodiment) when the automatic transmission 7 is switched from the manual shift mode (M range) to the automatic shift mode (D range).

The entire contents of Japanese Patent Application No. 2006-248076 (filed on September 13, 2006) are herein incorporated by reference.

Although the present invention has been described with reference to the above-specific embodiments of the invention, the invention is not limited to the these exemplary embodiments. Various modification and variation of the embodiments described above will occur to those skilled in the art in light of the above teaching. For example, the automatic transmission 7 may employ any type of transmission mechanism other than that shown in FIGS. 1 and 2. The setting time T of the detection prohibit timer 5 may be adjusted in accordance with various operation parameters such as vehicle driving conditions and oil temperature (viscosity) in view of the fact that the engagement time of the first brake 22 corresponding to the time duration T' changes depending on the above operation parameters. The scope of the invention is defined with reference to the following claims.

## Claims

1. A failure detection device for an automatic transmission, the automatic transmission being operable in first and second shift modes and having a one-way clutch to disable engine braking in a given gear stage and a plurality of friction elements to establish a power transmission path in accordance with a selected gear stage by selective engagement and disengagement of the friction elements, the friction elements including an engine braking friction element arranged in parallel with the one-way clutch so as to release the one-way clutch by disengagement of the engine braking friction element in the given gear stage under the first shift mode and to lock the one-way clutch by engagement of the engine braking friction element in the given gear stage under the second shift mode, the failure detection device comprising:
a failure detection unit that detects a failure in any of the friction elements of the automatic transmission based on a deviation between actual and target transmission gear ratios during non-shift operation of the automatic transmission; and
a prohibition unit that prohibits operation of the failure detection unit until a predetermined time has elapsed from switching of the automatic transmission from the first shift mode to the second shift mode.

2. A failure detection device for an automatic transmission, the automatic transmission being operable in first and second shift modes and having a one-way clutch to disable engine braking in a given gear stage and a plurality of friction elements to establish a power transmission path in accordance with a selected gear stage by selective engagement and disengagement of the friction elements, the friction elements including an engine braking friction element arranged in parallel with the one-way clutch so as to release the one-way clutch by disengagement of the engine braking friction element in the given gear stage under the first shift mode and to lock the one-way clutch by engagement of the engine braking friction element in the given gear stage under the second shift mode, the failure detection device comprising:
a failure detection unit that detects a failure in any of the friction elements of the automatic transmission based on a deviation between actual and target transmission gear ratios upon satisfaction of a certain condition during non-shift operation of the automatic transmission; and
a prohibition unit that prohibits operation of the failure detection unit for a lapse of a predetermined time regardless of the satisfaction of the certain condition when the automatic transmission is switched from the first shift mode to the second shift mode and allows operation of the failure detection unit immediately upon the satisfaction of the certain condition when the automatic transmission is switched from the second shift mode to the first shift mode.

3. A failure detection device according to claim 1 or 2, wherein the predetermined time is a duration between initiation and completion of engagement of the engine braking friction element.

4. A failure detection device according to any one of claims 1 to 3, wherein the given gear stage is either or both of a first gear stage and a second gear stage.

5. A failure detection method for an automatic transmission, the automatic transmission being operable in first and second shift modes and having a one-way clutch to disable engine braking in a given gear stage and a plurality of friction elements to establish a power transmission path in accordance with a selected gear stage by selective engagement and disengagement of the friction elements, the friction elements including an engine braking friction element arranged in parallel with the one-way clutch so as to release the one-way clutch by disengagement of the engine braking friction element in the given gear stage under the first shift mode and to lock the one-way clutch by engagement of the engine braking friction element in the given gear stage under the second shift mode, the failure detection method comprising:
detecting a failure in any of the friction elements of the automatic transmission based on a deviation between actual and target transmission gear ratios upon satisfaction of a certain condition; and
prohibiting said detecting until a predetermined time has elapsed from switching of the automatic transmission from the first shift mode to the second shift mode.
